Europäisches Patentamt

**European Patent Office**

**Office européen des brevets**

(11) Publication number: **0 109 267**
**B1**

## (12) EUROPEAN PATENT SPECIFICATION

(45) Date of publication of patent specification: **29.06.88**

(21) Application number: **83306865.3**

(22) Date of filing: **10.11.83**

(51) Int. Cl.⁴: **H 05 B 6/80,** F 24 C 15/16, A 47 J 37/04

(54) Oven having a rotary multi-level food support.

(30) Priority: **10.11.82 GB 8232127**

(43) Date of publication of application:
**23.05.84 Bulletin 84/21**

(45) Publication of the grant of the patent:
**29.06.88 Bulletin 88/26**

(84) Designated Contracting States:
**DE FR IT**

(56) References cited:
**EP-A-0 023 827**
**FR-A-2 494 562**
**GB-A-2 074 310**
**US-A-1 346 666**
**US-A-2 482 601**
**US-A-3 428 772**
**US-A-4 062 983**

(73) Proprietor: **BELLING & COMPANY LIMITED**
**Bridge Works Southbury Road**
**Enfield Middlesex (GB)**

(72) Inventor: **Brunton, David McKay Read**
**Latchford Lodge Latchford**
**Standon Nr. Ware Herts (GB)**

(74) Representative: **Cole, Paul Gilbert et al**
**Hughes Clark Andrews & Byrne 63 Lincoln's Inn**
**Fields**
**London WC2A 3JU (GB)**

## Description

The present invention relates to an oven having a rotatory multi-level food support.

A long-standing problem with microwave ovens is that food placed in the oven acts as a load that disturbs the pattern of the microwaves in the oven. One way of remedying this problem is to keep the food still and displace the pattern of microwaves by means of a rotatory reflector called a stirrer. The other way, with which this invention is concerned, is to keep the microwave pattern still and displace the food by means of a rotatory support such as a turntable. The analogy in conventional cooking is to food being cooked on a spit over a fire, the fire establishing a fixed thermal pattern and the food on the spit being rotated to give even heating. A rotatably mounted and motorised shelf support for a microwave oven in which vertically spaced shelves are supported by a framework with vertical rods is described in US-A-3428772. The frame means includes posts that support the shelves and a drive is provided for rotating the frame means, but the posts are distributed equi-angularly about the axis of rotation so that the shelves have to be lifted and fitted from their level attitude for insertion and removal. Because of the equi-angular post distribution the frame means has no front and no back and there is no reason to provide a unique parking position for the frame means.

There is currently proposed a development in which conventional thermal ovens should be fitted with a microwave cooking facility to assist in cooking of the food. This will enable all food to be cooked in a single oven rather than having a conventional oven and a separate microwave oven which is more expensive and takes up more space in the kitchen. But to get a good energy distribution the microwave energy should be injected from the centre of the back of the oven (where it will interfere with the fan) or from the centre of the oven door (which is manifestly impractical). So again a rotatory support arrangement is desirable, but is complicated by the fact that conventional ovens commonly have three or four shelves that are adjustable for height, and similar facilities will be wanted when using microwaves.

The present invention provides an oven having an oven having multi-level rotatory food support means therein comprising frame means adapted to hold removable food supports in a level attitude at a plurality of different vertically spaced positions, said frame means including posts that interlock with the food supports and drive means for rotating the frame means, characterised in that:

(a) the frame means includes a rear post and side posts that are substantially diametrically opposed with reference to an axis of rotation of the frame means and with no front posts so that food dishes of size up to the distance between the side posts can be inserted onto and removed from supports in a level attitude via an open front of the frame means;

(b) position sensor means provides a signal significant of the angular position of the frame means; and

(c) control means responsive to the signal from the position sensor means and operably connected to the drive means so that when said drive means has been switched off said drive means continues to rotate the frame means until a predetermined parking angular position is reached where its front is adjacent a door of the oven.

US Patent Specification No. 4062983 describes a switch for independently stopping rotation of frame means but operation of the drive motor is controlled by a switch without any associated position sensor or control.

An embodiment of the invention will now be described by way of example only with reference to the accompanying drawings, in which:

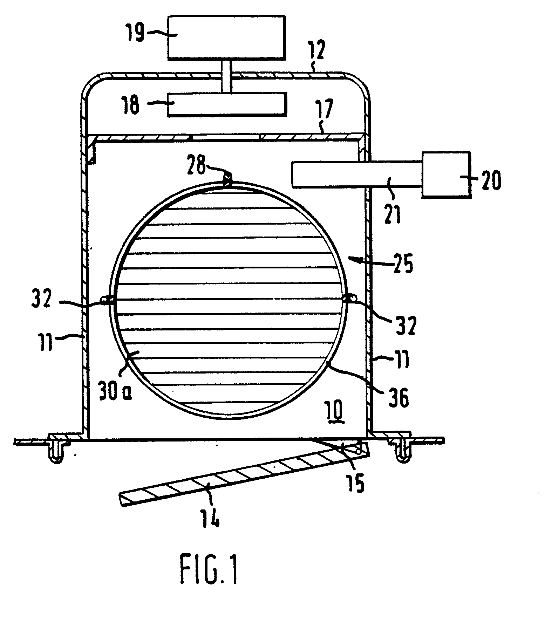

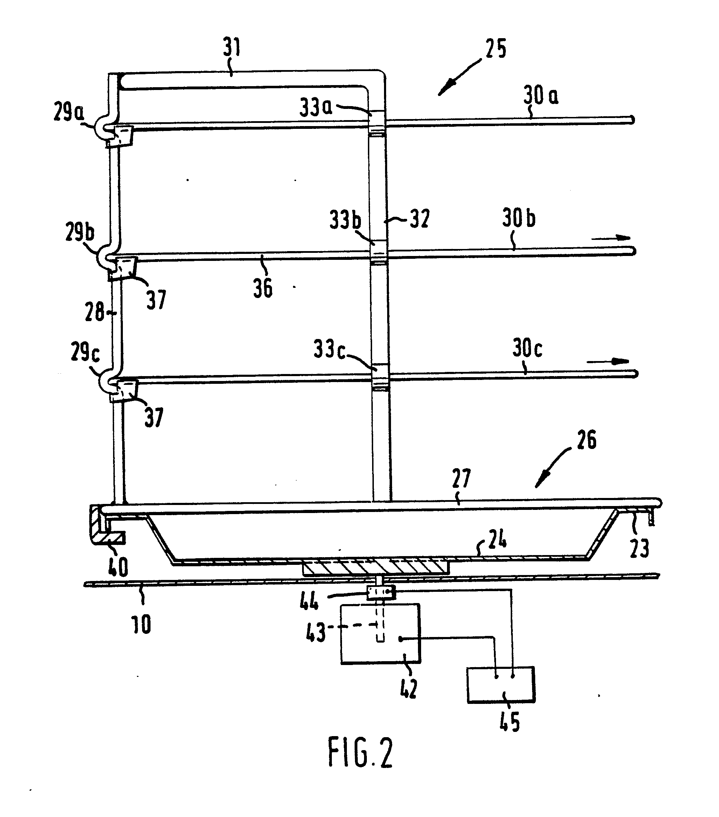

Figure 1 is a diagrammatic horizontal section of an oven according to the invention;

Figure 2 is a view from the side of the oven showing the turntable and shelf structure together with a drive and control unit;

Figure 3 is a fragmentary view of the rear part of the shelf structure showing how a shelf clips in place; and

Figure 4 is a circuit diagram of a possible motor drive and control unit.

In the drawings an oven has a floor 10, side walls 11, a rear wall 12 and a roof. A door 14 that does not transmit microwaves is pivoted to the oven by means of brackets 15. Between an apertured rear partition 17 and the rear wall 12 there is a forced circulation heater unit 18 including a fan driven by a motor 19 The oven is further provided with a magnetron 20 for carrying out microwave cooking and a waveguide 21 that leads the microwaves from the magnetron 20 into the oven cavity. In the oven cavity there is provided a turntable and a shelf support unit generally denoted by the reference numeral 25 that supports a plurality of removable shelves 30a-30c.

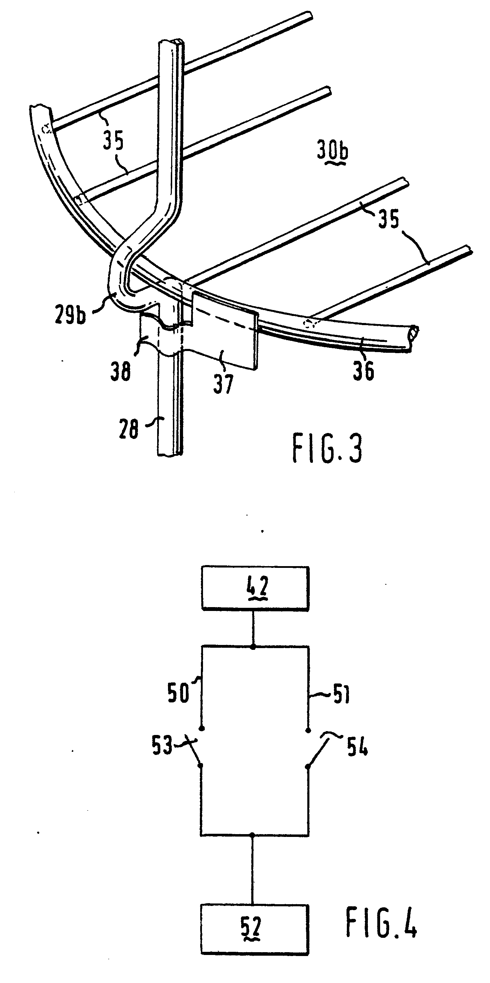

As is apparent from Figures 2 and 3 the shelf support frame or unit 25 is made of metal wire and comprises a base shelf 26 having bars and bounded by a circular lower rail 27 that rests upon the rim 23 of a dished turntable 24. Welded to the rail 27 is a rear post 28 that has a number (in this instance three) of U-bends 29a, 29b, 29c that define supports that locate and retain a plurality of removable generally circular shelves 30a, 30b, 30c. The shelf unit further comprises a member of inverted U-shape when viewed from the front that has a semi-circular limb welded to the rear post 28 and defining a top rail 31 from whose ends depend side posts 32 that are welded to the bottom rail 27. The side posts 32 are also formed with shelf locating and retaining U-bends 33a, 33b, 33c conforming to those in the rear post 28 and serving to locate the sides of the shelves 30a, 30b, 30c and support them in a horizontal attitude. It will be noted that the vertical part of the shelf support unit 25 is defined by the rear post 28 and the two side posts 32 but that it is open to the front so that food dishes can be conveniently inserted onto and removed from the shelves in a level attitude and the shelves 30a-30c can themselves be removed without tilting.

The shelves, as is apparent from Figure 3 which shows the shelf 30b, comprise metal bars 35 and a circular rim 36 that locates in the U-bends 29b, 33b. At the back of the shelf 30b a spring locating slip 37 is attached to the rim 36 and has a tongue 38 that clips onto the rear post 28. Thus the shelf 30b may be inserted into the frame by sliding it in a level attitude into place with the clip 37 just to the side of the rear post 28 and then rotating it about a vertical axis until the tongue 38 locates on the post 28. Correspondingly the shelf 30b may be removed by rotating it in the reverse direction until the tongue 38 disengages from the post 28 and then sliding the shelf forwardly. It will be appreciated that variations are possible, for example the shelves could carry spring clips like Terry clips that are a simple push fit onto the rear post 28. The frame may in use have all the shelves 30a-30c in place or it may have only some of them depending upon the food being cooked and the shelves are insertable at different heights with the same ease as in a conventional electric or fan oven. A hook 40 at the rear of the shelf support unit 25 engages the rim 23 of the turntable 24 to hold the shelf support unit 25 in place on the turntable. It will be noted that the lower rail 27 is of slightly larger diameter than the turntable 24 so that the fixed bottom shelf locates around the turntable rim 23 and is securely held while in use. But it can also rest on the rim 23 of the turntable, in which case further clamping means is desirable so that the support unit 25 cannot come off the turntable 24 while the oven is in use. The shelf support unit 25 can be removed from the turntable for cleaning purposes simply by lifting it off.

The turntable 24 is driven by a motor 42 beneath the floor 10 of the oven and the drive shaft or spindle 43 has a position indicating device such as an encoder 44 that is connected to motor control logic unit 45. The arrangement is such that the logic unit 45 causes the motor 42 to rotate the turntable 24 as required but when the motor 42 is not in operation the turntable 24 is caused to stop in a unique parked position. Thereby the open side of the shelf structure can be caused always to stop opposite the oven door 14 so that the food and shelves are accessible. It may be arranged that the turntable 24 and the shelf support unit 25 have inter-engaging formations such that the shelf support unit will fit onto the turntable 24 only in one angular position.

The shaft position can be detected by devices other than an encoder e.g. a cam and cam follower on the drive shaft 43. Alternatively the shaft 43 could carry a disc with a magnet in one location that approached a proximity switch once per revolution. Figure 4 shows a possible arrangement of this kind in which the motor 42 can be energised through a pair of parallel paths 50, 51 from a power unit 52. The path 50 has a switch 53 that is closed whenever the door 14 is closed so that the motor 42 runs continuously whenever the door 14 is closed. The path 51 has a proximity switch 54 that is closed unless the shelf support unit 25 and shaft 43 are in a predetermined angular position. Thus when the door 14 is opened the motor 42 is energised through path 51 until shaft 43 has reached the required angular position, after which switch 54 opens and the motor 42 stops, thereby "parking" the shelf support 25 in the required predetermined position.

Various modifications may be made to the embodiment described herein without departing from the invention, the scope of which is defined in the appended claims. For example in addition to wire shelves 30a-30c, the set of removable food supports may include ceramic dishes and pans which are flanged to fit the U-bends 29a-29c and 33a-33c. The shelves 30a-30c and shelf structure 25 need not be circular in plan provided that they are rotatable within the oven cavity, and other shapes such as an octagonal shape may be used. It is doubtful, however, whether shelves with less than six sides are desirable. Instead of being built into the floor 10, the drive could be built into the roof of the oven and the shelf structure 25 could be suspended therefrom and releasably connected thereto. The invention is particularly intended for use with ovens that cook by means of a combination of thermal heating and microwaves but it could be used in a pure microwave oven or even in a pure thermal oven or fan oven.

## Claims

1. An oven having multi-level rotary food support means therein comprising frame means (25) adapted to hold removable food supports (30a-30c) in a level attitude at a plurality of different vertically spaced positions, said frame means (25) including posts (28, 32) that interlock with the food supports and drive means (42) for rotating the frame means, characterised in that:

(a) the frame means includes a rear post (28) and side posts (32) that are substantially diametrically opposed with reference to an axis of rotation of the frame means and with no front posts so that food dishes of size up to the distance between the side posts (32) can be inserted onto and removed from supports (30a-30c) in a level attitude via an open front of the frame means;

(b) position sensor means (44) provides a signal significant of the angular position of the frame means (25); and

(c) control means (45) responsive to the signal from the position sensor means (44) and operably connected to the drive means (42) so that when said drive means (42) has been switched off said drive means (42) continues to rotate the frame means (25) until a predetermined parking angular position is reached where its front is adjacent a door (14) of the oven.

2. An oven according to claim 1, wherein the side members (32) and rear member (28) comprise wire posts that are folded to define locating hooks (29a-29c); (33a-33c) into which the removable food supports (30a-30c) engage, and each food support is provided with resilient clip means (37, 38) and is arranged that it may be pushed horizontally into engagement with the locating hooks of the side posts and rear post (29a-29c); (33a-33c) with the clip means (37, 38) to one side of the rear post (28) and rotated about a vertical axis to engage the clip means (38) with the rear post (28) and hold the support in position.

3. An oven according to any preceding claim, wherein at least some of the food supports (30a-30c) are circular wire trays.

4. An oven according to any preceding claim, wherein the frame means (25) has a base member (26) attached to the base of the rear and side posts (28), (32) and arranged to rest on a rotatory turntable (24) on the floor (10) of the oven.

5. An oven according to any preceding claim, wherein the drive means (42) rotates the frame means (25) by a spindle (43) connected thereto, and the spindle (43) has position encoder means (44) operatively connected to control logic means (45) for the drive motor (42) arranged when said motor (42) is switched off to park the frame means (25) in said predetermined angular position.

6. An oven according to any preceding claim, wherein a switch (53) associated with the door (14) enables the drive means (42) to operate continuously only when said door is closed and if said door is opened with the oven switched on the control means (54) operates to cause the motor (42) to continue to rotate until the frame means (25) has reached its parked position.

7. An oven according to any preceding claim arranged to be heated by microwaves (20, 21) or by microwaves (20, 21) and thermal heating (18, 19).

**Patentansprüche**

1. Ofen mit drehbarem, mehrschichtigen Nahrungsmittelträger mit einem Rahmen (25) zum Halten herausnehmbarer Nahrungsmittelträger (30a - 30c) in einer Grundstellung in einer Mehrzahl von senkrecht voneinander getrennten, verschiedenen Stellungen, wobei der Rahmen (25) Halter (28, 32) aufweist, welche mit den Nahrungsmittelträgern und den Antriebsmitteln (42) zum Drehantrieb des Rahmens ineinandergreifen, dadurch gekennzeichnet, daß

a) der Rahmen einen rückwärtigen Halter (28) und im wesentlichen in bezug auf eine Drehachse des Rahmens gegenüberliegende Seitenhalter (32) und keine Fronthalter aufweist, so daß Lebensmittelplatten mit einer Abmessung bis zum Abstand zwischen den Seitenhaltern (32) einsetzbar und von den Trägern (30a - 30c) in einer Grundstellung über eine offene Vorderfläche des Rahmens herausnehmbar sind;

b) ein Stellungssensor (44) vorgesehen ist, welcher ein dem Lagewinkel des Rahmens entsprechendes Signal abgibt; und

c) auf die Signale des Stellungssensors (44) ansprechende Kontrollmittel (45) vorgesehen sind, welche derart mit den Antriebsmitteln (42) verbunden sind, daß dann, wenn die Antriebsmittel (42) ausgeschaltet worden sind, die Antriebsmittel (42) den Rahmen (25) solange antreiben, bis eine vorbestimmte Parkwinkelstellung erreicht ist, in welcher die Vorderseite angrenzend an eine Tür (14) des Ofens positioniert ist.

2. Ofen nach Anspruch 1, dadurch gekennzeichnet, daß die Seitenhalter (32) und der rückwärtige Halter (28) Drahthalter aufweisen, welche zu Halteösen (29a - 29c), (33a - 33c) geformt sind, in welche die herausnehmbaren Nahrungsmittelträger (30a - 30c) eingreifen, und daß jeder Nahrungsmittelträger elastische Bügel (37, 38) aufweist, die derart angeordnet sind, daß jeder Nahrungsmittelträger waagerecht in Eingriff mit den Halteösen der Seitenhalter und des rückwärtigen Halters (29a - 29c), (33a - 33c) schiebbar ist, wobei die Bügel (37, 38) an einer Seite des rückwärtigen Halters (28) und um eine senkrechte Achse drehbar zum Eingriff der Bügel (38) in den rückwärtigen Halter (28) und zum Halten des Trägers in Stellung angeordnet sind.

3. Ofen nach Anspruch 1 oder 2, dadurch gekennzeichnet, daß wenigstens einige der Nahrungsmittelträger (30a - 30c) kreisförmige Drahtteller sind.

4. Ofen nach Anspruch 1 oder einem der folgenden, dadurch gekennzeichnet, daß der Rahmen (25) einen Unterbau (26) aufweist, der am Fuß des rückwärtigen Halters (28) und der Seitenhalter (32) befestigt und auf einem Drehtisch (24) auf dem Boden (10) des Ofens angeordnet ist.

5. Ofen nach Anspruch 1 oder einem der folgenden, dadurch gekennzeichnet, daß die Antriebsmittel (42) den Rahmen (25) über eine damit verbundene Spindel (43) drehen, und daß die Spindel (43) Positionskodiermittel (44) aufweist, welche mit logischen Kontrollmitteln (45) für den Antriebsmotor (42) derart verbunden sind, daß, wenn der Motor (42) ausgeschaltet wird, der Rahmen (25) in vorbestimmter Winkelstellung geparkt wird.

6. Ofen nach Anspruch 1 oder einem der folgenden, dadurch gekennzeichnet, daß ein mit der Tür (14) verbundener Schalter (53) den kontinuierlichen Betrieb der Antriebsmittel (42) nur ermöglicht, wenn die Tür geschlossen ist, und wenn die Tür mit dem über die Kontrollmittel (54) abgeschalteten Ofen geöffnet ist, der Schalter den Motor (42) zur Fortsetzung der Drehbewegung betätigt, bis der Rahmen (25) seine Parkstellung erreicht hat.

7. Ofen nach Anspruch 1 oder einem der folgenden, dadurch gekennzeichnet, daß dieser durch Mikrowellen (20, 21) oder durch Mikrowellen (20, 21) und thermische Erhitzung (18, 19) betrieben wird.

**Revendications**

1. Un four muni d'un système de support à aliments tournant à plusieurs niveaux comprenant une structure (25) adaptée pour soutenir horizontalement des supports à aliments amovibles (30a - 30c) à divers niveaux répartis verticalement, structure (25) comportant des montants (28, 32) rendus solidaires desdits supports à aliments et du système d'entraînement (42) qui commande la rotaton de ladite structure, présentant les caractéristiques suivantes:

a) La structure comporte un montant arrière (28) et des montants latéraux (32), qui sont, en fait, diamétralement opposés par rapport à l'axe de rotation de ladite structure, mais aucun montant avant, de manière à ce que les récipients culinaires, dont la plus grande dimension peut atteindre la distance qui sépare les montants latéraux (32), puissent être introduits horizontalement sur les supports (30a -30c), ou en être retirés horizontalement, par la face avant ouverte de ladite structure;

b) un système de détection de position (44) fournit un signal qui indique la position angulaire de la structure (25); et

c) un système de contrôle (45), qui réagit au signal délivré par le système de détection de position (44) et relié de façon active au système d'entraînement (42), de façon à ce que, lorsque ledit système d'entraînement (42) se trouve coupé, il continue à commander la rotation du système de support (25) jusqu'à une position angulaire d'arrêt prédéterminée de celui-ci telle que l'avant dudit système de support soit en face de la porte (14) du four.

2. Un four en conformité avec la revendication (1) dans lequel les montants latéraux (32) et le montant arrière (28) comportent des segments métalliques qui sont incurvés de manière à définir des logements de positionnement (29a - 29c), (33a - 33c), dans lesquels s'engagent les supports à aliments amovibles (30a - 30c), et dans lesquels chaque support à aliments est muni d'un système d'encliquetage à ressort (37, 38) et est conçu de façon à pouvoir être glissé horizontalement pour s'engager dans les logements de positionnement des montants arrière et latéraux (29a - 29c), (33a - 33c) avec le système d'encliquetage à ressort (37, 38) amené sur le côté du montant arrière (28), puis soumis à un mouvement de rotation autour d'un axe vertical pour faire jouer ledit système d'encliquetage (38) sur le montant arrière (28) et maintenir le support en position.

3. Un four en conformité avec l'une quelconque des revendications qui précèdent, dans lequel au moins l'un des supports à aliments (30a - 30c) sont des clayettes métalliques circulaires.

4. Un four en conformité avec l'une quelconque des revendications qui précèdent, dans lequel la structure (25) a un élément de base (26) fixé à la base des montants arrière et latéraux (28), (32) et conçu de façon à reposer sur un plateau tournant (24) sur la sole (10) du four.

5. Un four en conformité avec l'une quelconque des revendications qui précèdent, dans lequel le système d'entraînement (42) assure la rotation de la structure (25) par l'intermédiaire d'un axe (43) qui lui est associé et dans lequel ledit axe est muni d'un codeur de position (44) relié de façon active au système logique de contrôle (45) pour le moteur d'entraînement (42) de façon, lorsque ledit moteur (42) est coupé, à arrêter la structure (25) dans une position angulaire prédéterminée.

6. Un four en conformité avec l'une quelconque des revendications qui précèdent, dans lequel un commutateur (53) associé à la porte (14) permet au système d'entraînement (42) de fonctionner de façon continue exclusivement lorsque ladite porte est fermée et, si ladite porte est ouverte tandis que le four est allumé, le système de contrôle (54) agit de manière à ce que le moteur (42) continue à tourner jusqu'à ce que la structure (25) ait atteint sa position d'arrêt.

7. Un four en conformité avec l'une quelconque des revendications qui précèdent, conçu pour chauffer par micro-ondes (20, 21) ou par micro-ondes (20, 21) et par une source thermique (18, 19).

0 109 267

FIG.1

FIG.2

FIG.3

FIG.4